# EUROPEAN PATENT SPECIFICATION

(11) **EP 3 358 778 B1**
(45) Date of publication and mention of the grant of the patent: **11.12.2019**
(21) Application number: 17154600.5
(22) Date of filing: 03.02.2017
(51) Int. Cl.: H04L 5/00

(54) **SELECTING A WAVEFORM FORMAT USED BY A MOBILE DEVICE FOR AN UPLINK COMMUNICATION WITH A BASE STATION**
AUSWAHL EINES WELLENFORMFORMATES ZUR UPLINK-VERBINDUNG EINES MOBILEN GERÄTES MIT EINER BASISSTATION
SELECTION DU FORMAT DE LA FORME D'ONDE UTILISÉE PAR UN APPAREIL MOBILE POUR UNE COMMUNICATION EN LIAISON MONTANTE AVEC UNE STATION DE BASE

(43) Date of publication of application: 08.08.2018
(73) Proprietor: Intel IP Corporation, Santa Clara, CA 95054 (US)
(72) Inventor: Miao, Honglei, 80686 Munich (DE); Faerber, Michael, 82515 Wolfratshausen (DE); Karls, Ingolf, 85622 Feldkirchen (DE)
(74) Representative: 2SPL Patentanwälte PartG mbB

(56) References cited:
- WO-A2-2010/030941
- US-A1- 2014 146 754
- GUANGDONG OPPO MOBILE TELECOM: "Waveform selection for uplink control signal", 3GPP DRAFT; R1-1611705, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Reno, USA; 20161114 - 20161118 13 November 2016 (2016-11-13), XP051175675, Retrieved from the Internet: URL:http://www.3gpp.org/ftp/Meetings_3GPP_ SYNC/RAN1/Docs/ [retrieved on 2016-11-13]
- GUANGDONG OPPO MOBILE TELECOM: "Discussion on the waveform for the one Tx port UE", 3GPP DRAFT; R1-1700574, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Spokane, USA; 20170116 - 20170120 16 January 2017 (2017-01-16), XP051208104, Retrieved from the Internet: URL:http://www.3gpp.org/ftp/Meetings_3GPP_ SYNC/RAN1/Docs/ [retrieved on 2017-01-16]
- AT&T: "Network Assistance in NR Waveform Selection", 3GPP DRAFT; R4-1609241 NETWORK ASSISTANCE IN NR WAVEFORM SELECTION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRA , vol. RAN WG4, no. Reno, USA; 20161114 - 20161118 14 November 2016 (2016-11-14), XP051179551, Retrieved from the Internet: URL:http://www.3gpp.org/ftp/Meetings_3GPP_ SYNC/RAN4/Docs/ [retrieved on 2016-11-14]

## Description

### Field

Examples relate to selecting a waveform format for uplink communication. In particular, examples relate to a method in a base station for selecting a waveform format used by a mobile device for an uplink communication with the base station, and a method in a mobile device for selecting a waveform format used by the mobile device for an uplink communication with a base station. Further examples relate to a base station, and a mobile device.

### Background

A radio system may support different waveforms for both downlink and uplink transmission. For example, given that several uplink waveforms are standardized in a transmission standard and a user equipment in a cell supports multiple uplink waveforms, the selection of a particular waveform for an uplink data transmission at a time may be desired.

US2014/146754 ("D1") discloses a method for waveform selection and adaptation. D1 discloses that a plurality of candidate waveforms are identified for transporting traffic over the wireless link, one of the plurality of candidate waveforms is selected in accordance with a waveform selection criteria, and the traffic over the wireless link is communicated using the selected candidate waveform.

Guangdong Oppo Mobile Telecom: "Waveform selection for uplink control signal" 3GPP Draft Rl-1611705 ("D2") discloses that network can decide and communicate to the UE which one of CP-OFDM and DFT-S-OFDM based waveforms to use. D2 discloses that with two waveforms (WF) both being adopted in NR UL, the network (NW) needs to decide when to use each WF and inform the UE such decision and in general, the switching decision between these two WF could be based on UL channel quality such as SINR etc.

Guangdong Oppo Mobile Telecom: "Discussion on the waveform for the one Tx port UE" 3GPP Draft R1-1700574 ("D3") is related to waveform selection for one transmit power UE. D3 discloses that network should decide which waveform shall be used and indicate it to UE. D3 discloses that it is necessary to have L1 signaling configuration of waveform and NR should support L1 signaling configuration of waveform.

AT&T: "Network Assistance in NR Waveform Selection" 3GPP Draft R4-1609241 ("D4") discloses simulation results with single and mixed numerology and the spectral efficiency comparison of CP-OFDM, F-OFDM and W-OFDM with 3 guard tones. D4 discloses that the network can use 1 bit as part of scheduling grant (control channel) to indicate the waveform selection to the UE.

WO2010/030941 ("D5") discloses a method for indicating a type of waveform utilized for uplink transmission. D5 discloses that a base station can include an uplink waveform management component that can signal information identifying a base station-selected type of waveform to be utilized by an access terminal for uplink transmission. D5 discloses that the base station can use layer 1 or layer 3 signaling to signal the base station-selected waveform to the access terminal.

### Brief description of the Figures

The invention is defined in the claims Some examples of apparatuses and/or methods will be described in the following by way of example only, and with reference to the accompanying figures, in which
Fig. 1 illustrates a flowchart of an example of a method in a base station for selecting a waveform format used by a mobile device for an uplink communication with the base station;
Fig. 2 illustrates an example of a signaling sequence between a mobile device and a base station;
Fig. 3 illustrates an example of a base station for selecting a waveform format used by a mobile device for an uplink communication with the base station;
Fig. 4 illustrates a flowchart of an example of a method in a mobile device for selecting a waveform format used by the mobile device for an uplink communication with a base station;
Fig. 5 illustrates another example of a signaling sequence between a mobile device and a base station; and
Fig. 6 illustrates an example of a mobile for selecting a waveform format used by the mobile device for an uplink communication with a base station.

### Detailed Description

Various examples will now be described more fully with reference to the accompanying drawings in which some examples are illustrated. In the figures, the thicknesses of lines, layers and/or regions may be exaggerated for clarity.

Accordingly, while further examples are capable of various modifications and alternative forms, some particular examples thereof are shown in the figures and will subsequently be described in detail. However, this detailed description does not limit further examples to the particular forms described. Further examples may cover all modifications, and alternatives falling within the scope of the disclosure. Like numbers refer to like or similar elements throughout the description of the figures, which may be implemented identically or in modified form when compared to one another while providing for the same or a similar functionality.

It will be understood that when an element is referred to as being "connected" or "coupled" to another element, the elements may be directly connected or coupled or via one or more intervening elements. If two elements A and B are combined using an "or", this is to be understood to disclose all possible combinations, i.e. only A, only B as well as A and B. An alternative wording for the same combinations is "at least one of A and B". The same applies for combinations of more than 2 Elements.

The terminology used herein for the purpose of describing particular examples is not intended to be limiting for further examples. Whenever a singular form such as "a," "an" and "the" is used and using only a single element is neither explicitly or implicitly defined as being mandatory, further examples may also use plural elements to implement the same functionality. Likewise, when a functionality is subsequently described as being implemented using multiple elements, further examples may implement the same functionality using a single element or processing entity. It will be further understood that the terms "comprises," "comprising," "includes" and/or "including," when used, specify the presence of the stated features, integers, steps, operations, processes, acts, elements and/or components, but do not preclude the presence or addition of one or more other features, integers, steps, operations, processes, acts, elements, components and/or any group thereof.

Unless otherwise defined, all terms (including technical and scientific terms) are used herein in their ordinary meaning of the art to which the examples belong.

In the following, various examples relate to devices (e.g. cell phone, base station) or components (e.g. transmitter, transceiver) of devices used in wireless or mobile communications systems. A mobile communication system may, for example, correspond to one of the mobile communication systems standardized by the 3rd Generation Partnership Project (3GPP), e.g. Global System for Mobile Communications (GSM), Enhanced Data rates for GSM Evolution (EDGE), GSM EDGE Radio Access Network (GERAN), High Speed Packet Access (HSPA), Universal Terrestrial Radio Access Network (UTRAN) or Evolved UTRAN (E-UTRAN), LTE or LTE-Advanced (LTE-A), 5^{th} Generation (5G), or mobile communication systems with different standards, e.g. Worldwide Interoperability for Microwave Access (WIMAX) IEEE 802.16 or Wireless Local Area Network (WLAN) IEEE 802.11, generally any system based on Time Division Multiple Access (TDMA), Frequency Division Multiple Access (FDMA), Orthogonal Frequency Division Multiple Access (OFDMA), Code Division Multiple Access (CDMA), etc. The terms mobile communication system and mobile communication network may be used synonymously.

The mobile communication system may comprise a plurality of transmission points or base station transceivers operable to communicate radio signals with a mobile transceiver. In these examples, the mobile communication system may comprise mobile transceivers, relay station transceivers and base station transceivers. The relay station transceivers and base station transceivers can be composed of one or more central units and one or more remote units.

A mobile transceiver or mobile device may correspond to a smartphone, a cell phone, User Equipment (UE), a laptop, a notebook, a personal computer, a Personal Digital Assistant (PDA), a Universal Serial Bus (USB) -stick, a tablet computer, a car, etc. A mobile device or terminal may also be referred to as UE or user in line with the 3GPP terminology. A base station transceiver or base station can be located in the fixed or stationary part of the network or system. A base station may correspond to a remote radio head, a transmission point, an access point, a macro cell, a small cell, a micro cell, a pico cell, a femto cell, a metro cell etc. The term small cell may refer to any cell smaller than a macro cell, i.e. a micro cell, a pico cell, a femto cell, or a metro cell. Moreover, a femto cell is considered smaller than a pico cell, which is considered smaller than a micro cell. A base station can be a wireless interface of a wired network, which enables transmission and reception of radio signals to a UE, mobile transceiver or relay transceiver. Such a radio signal may comply with radio signals as, for example, standardized by 3GPP or, generally, in line with one or more of the above listed systems. Thus, a base station transceiver may correspond to a NodeB, an eNodeB, a BTS, an access point, etc. A relay station transceiver may correspond to an intermediate network node in the communication path between a base station transceiver and a mobile station transceiver. A relay station transceiver may forward a signal received from a mobile transceiver to a base station, signals received from the base station to the mobile station transceiver, respectively.

The mobile communication system may be cellular. The term cell refers to a coverage area of radio services provided by a transmission point, a remote unit, a remote head, a remote radio head, a base station, relay transceiver or a NodeB, an eNodeB, respectively. The terms cell and base station may be used synonymously. In some examples a cell may correspond to a sector. For example, sectors can be achieved using sector antennas, which provide a characteristic for covering an angular section around a base station transceiver or remote unit. In some examples, a base station transceiver or remote unit may, for example, operate three or six cells covering sectors of 120° (in case of three cells), 60° (in case of six cells) respectively. Likewise a relay transceiver may establish one or more cells in its coverage area. A mobile transceiver can be registered or associated with at least one cell, i.e. it can be associated to a cell such that data can be exchanged between the network and the mobile in the coverage area of the associated cell using a dedicated channel, link or connection. A mobile device may hence register or be associated with a relay station or base station directly or indirectly, where an indirect registration or association may be through one or more relay transceivers.

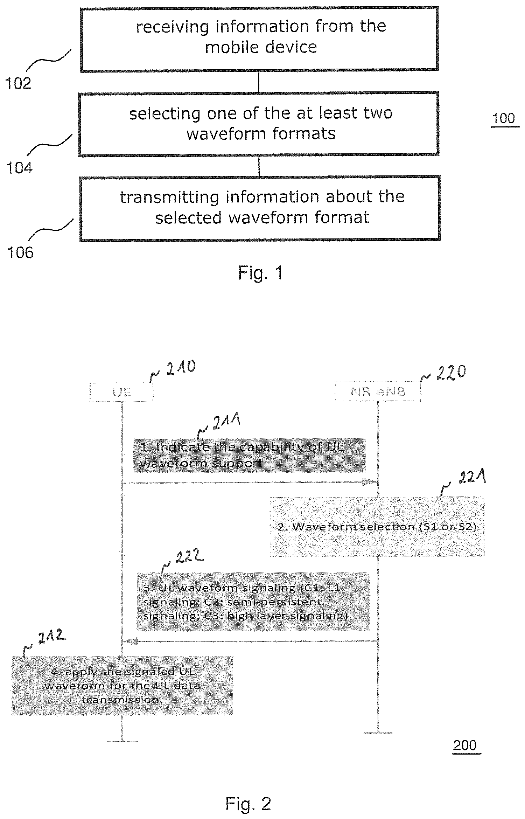

Fig. 1 illustrates a method 100 in a base station for selecting a waveform format used by a mobile device for an uplink communication with the base station. The method 100 comprises receiving 102 information from the mobile device about at least two different waveform formats supported by the mobile device for uplink communication according to a transmission standard. Further, the method 100 comprises selecting 104 one of the at least two different waveform formats for uplink communication by the mobile device. The method 100 additionally comprises transmitting 106 information about the selected waveform format for uplink communication to the mobile device.

The method 100 may allow to select and reconfigure the waveform format used by a mobile device supporting multiple wave formats. Method 100 may enable the base station to one of the at least two different waveform formats for the uplink communication by the mobile device to the base station. The selection may further consider design limitations (i.e. the supported waveform formats) of the mobile device. After receiving the information about the selected waveform format for uplink communication, the mobile device may transmit the remaining uplink data to the base station using the selected waveform format. This additional degree of freedom may allow to improve a Quality of Service (QoS) / Quality of Experience (QoE) for a user of the mobile device. Additionally, power efficiency of the mobile device may be improved since different waveform formats may exhibit different transmission power characteristics.

The waveform format is the scheme according to which waveforms of uplink signals are generated by the mobile device. The waveform format is the mechanism how one or more carrier signals is/are modulated by one or more data symbols. A transmission standard (e.g. as standardized by the 3GPP or the IEEE) may support two or more different waveform formats. That is, the transmission standard may support different ways how one or more carrier signals may be modulated by one or more data symbols in order to generate an uplink signal. The waveform format may, e.g., be a single-carrier modulation scheme or a multi-carrier modulation scheme. For example, the waveform format may be Cyclic Prefix based Orthogonal Frequency-Division Multiplexing (CP-OFDM), Discrete Fourier Transform spread OFDM (DFTs-OFDM), Filter Bank Multi-Carrier (FBMC), Universal Filtered Multi-Carrier (UFMC), Generalised Frequency Division Multiplexing (GFDM), Universal Frequency Division Multiplexing (UFDM), or filtered OFDM (f-OFDM) and the like.

The mobile device supports at least two waveform formats for uplink communication according to a transmission standard. That is, the mobile device supports at least two schemes for generating an uplink signal according to the transmission standard. For example, the mobile device may support the waveform formats CP-OFDM and DFTs-OFDM. CP-OFDM has merits in terms of simplicity, and in regard of scheduling resource blocks it offers a high flexibility. However, CP-OFDM causes a high Peak to Average Power Ratio (PAPR). The PAPR of the uplink signal has a large impact on the efficiency of a transmitter's power amplifier. Since the mobile device is battery-operated, it is a more critical issue for the mobile device than for a base station. A waveform format enabling a reduced PAPR is DFTs-OFDM. By selecting between these two waveform formats, method 100 may allow the base station to select a preferred waveform format for uplink communication at a time. It is evident for a person skilled in the art that a mobile device is not limited to the above example. In general, a mobile device may support any number (greater than one) of waveform formats for a transmission standard.

In some examples, selecting 104 one of the at least two different waveform formats for uplink communication may comprise transmitting control information to the mobile device. The control information comprises an instruction for the mobile device to transmit uplink data to the base station using different ones of the at least two supported waveform formats for uplink communication. Further, selecting 104 one of the at least two different waveform formats for uplink communication may comprise calculating a respective receive performance for the waveform formats for uplink communication based on the uplink data received from the mobile device. Selecting 104 one of the at least two different waveform formats for uplink communication may additionally comprise selecting, based on the calculated receive performances, one of the waveform formats for uplink communication as the selected waveform format for uplink communication.

For example, during the start phase of an uplink communication (uplink data transmission), the base station may instruct the mobile device to use different ones of the at least two supported waveform formats for uplink communication. By comparing the calculated receive performances (e.g. Block Error Ratio, BLER), the waveform format exhibiting the best receive performance may be selected as selected waveform format for uplink communication. Accordingly, the method 100 may allow the base station to select the waveform format for uplink communication that currently exhibits the best transmission quality.

Alternatively, selecting 104 one of the at least two different waveform formats for uplink communication may comprise transmitting control information to the mobile device. The control information comprises an instruction for the mobile device to transmit uplink data to the base station using one of the at least two supported waveform formats for uplink communication. Further, selecting 104 one of the at least two different waveform formats for uplink communication may comprise calculating a receive performance for the one waveform format for uplink communication based on the uplink data received from the mobile device. Selecting 104 one of the at least two different waveform formats for uplink communication may additionally comprise comparing the receive performance to a quality indicator.

That is, according to method 100, the base station may instruct the mobile device to transmit uplink data using a first one of the supported waveform formats. Based on a comparison of the receive performance for the used waveform format with the quality indicator, the base station may further decide, whether or not the first one of the supported waveform formats is suitable for the current uplink communication. The quality indicator may, e.g., be a minimum receive performance to be met by the waveform format, or a receive performance range to be met by the waveform format

If the receive performance meets the quality indicator, selecting 104 one of the at least two different waveform formats for uplink communication may further comprise selecting the one waveform format for uplink communication as selected waveform format for uplink communication. That is, if the first one of the supported waveform formats is considered suitable for the current uplink communication by the base station, the base station may inform the mobile device to use this waveform format for the remaining uplink communication.

If the receive performance does not meet the quality indicator, selecting 104 one of the at least two different waveform formats for uplink communication may further comprise transmitting further control information to the mobile device. The further control information comprises an instruction for the mobile device to transmit uplink data to the base station using another one of the at least two supported waveform formats for uplink communication. That is, if the first one of the supported waveform formats is not considered suitable for the current uplink communication by the base station, the base station may instruct the mobile device to try another supported waveform format.

Accordingly, the base station may iteratively instruct the mobile device to use different ones of the at least two supported waveform formats for uplink communication until a waveform format is selected that is considered suitable for the current uplink communication by the base station. Compared to the above-mentioned approach, in which uplink data is transmitted from the mobile device to the base station using different waveform formats ab initio, a number of waveform formats that is tested for determining the selected waveform format for uplink communication may be reduced. For example, already the first one of the at least two supported waveform formats for uplink communication may be considered suitable by the base station. Accordingly, no other supported waveform formats need to be tested.

In some examples, selecting 104 one of the at least two different waveform formats for uplink communication may based on available context information. The context information is information that affects the uplink communication between the mobile device and the base station. For example, the available context information may be Channel State Information (CSI) about the used uplink channel. The CSI may, e.g., include information about an uplink path loss or about a mobile device's transmission power head room for a specific waveform format. This information may, e.g., be directly calculated (estimated) by the base station, or be obtained from feedback by the mobile device. The available context information may also comprise parameters given by the underlying communication network. For example, the network may restrict the waveform formats supported by the base station. Moreover, also parameters like a current or a desired (planned) load of the network or the base station may be used for selecting the one of the at least two different waveform formats for uplink communication.

Transmitting 106 information about the selected waveform format to the mobile device may, in some examples, comprise transmitting the information about the selected waveform format to the mobile device via layer 1 or layer 2 control signaling according to the transmission standard. Transmission standards define a plurality of layers (e.g. three or more) in their respective protocol stack. A layer within the present disclosure may be understood as a logical layer that characterizes the internal functions of a communication system or a communication network according to the transmission standard by partitioning it into one or more abstracted layers. A layer may serve the layer above it and may be served by the layer below it. Two instances at one layer may be connected by a horizontal connection on that layer. In some examples, the layers may be layers according to the Open Systems Interconnection (OSI) model. Layer 1 may be the lowest layer. For example, layer 1 may be a physical layer that carries the information from higher layers (layer 2, layer 3, etc.) over the air interface. Layer 2 may comprise Medium Access Control (MAC) that is responsible for channel access control to the physical medium, Radio Link Control (RLC), etc. Layer 3 may comprise Radio Resource Control (RRC), Internet Protocol (IP) etc. A layer i (i = 1, 2, 3, ...) control signal is, hence, a signal for controlling a specific function in layer i.

For example, layer 1 control signaling related to a grant of uplink resources to the mobile device may comprise the information about the selected waveform format. The layer 1 control signaling related to a grant of uplink resources to the mobile device is a signaling from the base station to the mobile device that indicates that certain uplink resources are granted (assigned) to the mobile device. The layer 1 control signaling related to a grant of uplink resources to the mobile device may, e.g., be transmitted from the base station to the mobile device in response to layer 1 control signaling from the mobile device to the base station that is related to scheduling of uplink resources to the mobile device. For example, one or more bits (depending on the number of supported waveform formats) may be defined in the layer 1 control signaling related to a grant of uplink resources to the mobile device that indicate the selected waveform format for the uplink communication. This may enable to select the waveform format (and inform the mobile device) on a transmission time interval basis. Hence, using layer 1 control signaling related to a grant of uplink resources to the mobile device may allow dynamic waveform (format) signaling.

In some examples, a specific layer 1 control signaling dedicated to controlling the waveform format for uplink communication may comprise the information about the selected waveform format. That is, a specific layer 1 control signaling for controlling the waveform format for uplink communication may be defined in the transmission standard and be used to inform the mobile device about the selected waveform format. This may enable the base station to send information about the selected waveform format to the mobile device only after the initial selection of the waveform format and any reselection of the waveform format by the base station. Using specific layer 1 control signaling dedicated to controlling the waveform format for uplink communication may allow to reduce data transmission from the base station to the mobile device that is related to controlling the waveform format for uplink communication. Specific layer 1 control signaling dedicated to controlling the waveform format for uplink communication may, hence, allow semi-persistent waveform (format) signaling.

Alternatively, transmitting 106 information about the selected waveform format to the mobile device may comprise transmitting the information about the selected waveform format to the mobile device via layer 3 or higher layer control signaling according to the transmission standard. For example, a layer 3 RRC (re-)configuration message may comprise the information about the selected waveform format. This may allow a semi-static waveform (format) signaling.

In **Fig. 2**, an exemplary signaling sequence 200 between a mobile device and a base station in accordance with method 100 is illustrated.

For example, after the mobile device 210 accomplishes the initial access to the communication network (represented by base station 220) and establishes the RRC connection, the mobile device signals 211 its capability of supporting multiple uplink waveforms (waveform formats) to the network.

Upon receiving the information about the mobile device 210's waveform capability, the base station 220 (e.g. an eNodeB) determines 221 the uplink waveform (format) for the mobile device by applying one of the above-mentioned methods. That is, based on the mobile device 210's capability of supporting different uplink waveforms, the base station 220 determines the uplink waveform. For example, a network initiated waveform training (S1) may be employed. During the start phase of a sequence of uplink data packet transmissions, the base station 220 alternatively uses different supported uplink waveforms, i.e., the base station 220 instructs the mobile device to use different ones of its supported uplink waveforms for data transmission to the base station 220. The average receive performance (e.g. BLER) of the uplink data packets associated with a respective waveform is obtained. This may allow the base station 220 to determine the preferred uplink waveform for the rest of the uplink data packet transmission. Alternatively, the base station 220 may, e.g., employ an uplink channel state information based selection (S2). In this approach, the base station selects the uplink waveform based on the uplink channel state information (e.g. including uplink path loss and mobile device's transmission power headroom), etc. All the information may be estimated directly by the base station 220, or be obtained from the mobile device 210's feedback.

After the selection 221 of the uplink waveform, the base station 220 further signals 222 the selected uplink waveform to the mobile device using one of the above-mentioned methods. That is, the base station 220 may dynamically or semi-statically configure the selected uplink waveform of the mobile device 210 by layer 1 / layer 2 control signaling or high layer signaling, respectively. For example, dynamic waveform signaling (C1) may be used. In the layer 1 uplink grant control signaling, depending on the number of supported uplink waveforms, one or two bits may, e.g., be defined to indicate the selected waveform to be used for the scheduled uplink data transmission. This may enable the uplink waveform selection on a transmission time interval basis. Alternatively, a semi-persistent waveform signaling (C2) may be used. A specific layer 1 control signaling is designed to activate the selected uplink waveform in the mobile device 210. When the preferred uplink waveform is changed, the base station 220 can send another layer 1 control signaling to activate the reselected uplink waveform in the mobile device 210. Further alternatively, semi-static waveform signaling (C3) may be used. The base station 220 may use RRC configuration messages including a new information element about the uplink waveform to signal the selected uplink waveform to the mobile device 210. Similarly, the base station 210 may change the uplink waveform by a RRC reconfiguration message.

With the reception of the selected uplink waveform from the base station 220, the mobile device 210 transmits 212 the uplink data packet by using the configured uplink waveform from the network.

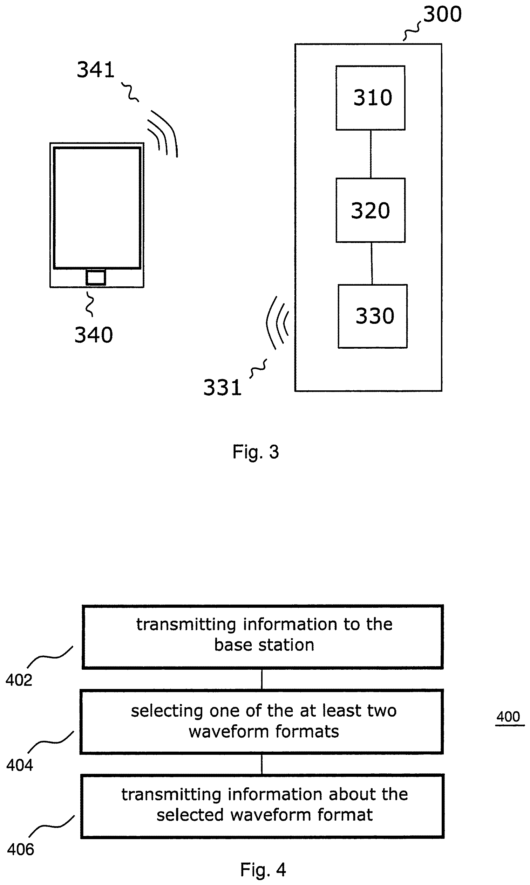

An implementation of a base station according to the proposed concept is illustrated in Fig. 3. Fig. 3 illustrates a base station 300 for selecting a waveform format used by a mobile device 340 for an uplink communication with the base station 300. The base station 300 comprises a receiver 310 configured to receive information 341 from the mobile device 340 about at least two different waveform formats supported by the mobile device 340 for uplink communication according to a transmission standard. Further, the base station 300 comprises a selection circuit 320 configured to select one of the at least two different waveform formats for uplink communication by the mobile device 340. The base station 300 additionally comprises a transmitter 330 configured to transmit information 331 about the selected waveform format for uplink communication to the mobile device 340.

The base station 300 may allow to select and reconfigure the waveform format used by the mobile device 340. The base station 300 may consider design limitations (i.e. the supported waveform formats) of the mobile device 340. After receiving the information 331 about the selected waveform format for uplink communication, the mobile device 340 may transmit the remaining uplink data to the base station 300 using the selected waveform format. This additional degree of freedom may allow to improve a QoS / QoE for a user of the mobile device 340. Additionally, power efficiency of the mobile device 340 may be improved since different waveform formats may exhibit different transmission power characteristics.

More details and aspects of the base station 300 are mentioned in connection with the proposed concept or one or more examples described above (e.g. Figs. 1 and 2). The base station 300 or its components may be configured to perform one or more additional optional features corresponding to one or more aspects of the proposed concept or one or more examples described above.

For example, the transmitter 330 may be further configured to transmit control information to the mobile device 340. The control information comprise an instruction for the mobile device 340 to transmit uplink data to the base station 300 using different ones of the at least two supported waveform formats for uplink communication. The selection circuit 320 may be further configured to calculate a respective receive performance for the waveform formats for uplink communication based on the uplink data received from the mobile device 340. The selection circuit 320 may be further configured to select, based on the calculated receive performances, one of the used waveform formats for uplink communication as the selected waveform format for uplink communication.

Alternatively, the transmitter 330 may be further configured to transmit control information to the mobile device 340. The control information comprise an instruction for the mobile device 340 to transmit uplink data to the base station 300 using one of the at least two supported waveform formats for uplink communication. The selection circuit 320 may be further configured to calculate a receive performance for the one waveform format for uplink communication based on the uplink data received from the mobile device 340. The selection circuit 320 may be further configured to compare the receive performance to a quality indicator.

If the receive performance meets the quality indicator, the selection circuit 320 may be further configured to select the one waveform format for uplink communication as selected waveform format for uplink communication. If the receive performance does not meet the quality indicator, the transmitter 330 may be configured to transmit further control information to the mobile device 340, wherein the further control information comprises an instruction for the mobile device 340 to transmit uplink data to the base station 300 using another one of the at least two supported waveform formats for uplink communication.

In some examples, the selection circuit 320 may be configured to select the one of the at least two different waveform formats for uplink communication based on available context information. The context information is information that affects the uplink communication between the mobile device 340 and the base station 300.

The transmitter 330 may, e.g., be configured to transmit the information 331 about the selected waveform format to the mobile device 340 via layer 1 or layer 2 control signaling according to the transmission standard. For example, layer 1 control signaling related to a grant of uplink resources to the mobile device 340 may comprise the information 331 about the selected waveform format. Alternatively, specific layer 1 control signaling dedicated to controlling the waveform format for uplink communication may comprise the information 331 about the selected waveform format.

In some examples, the transmitter 330 may be configured to transmit the information 331 about the selected waveform format to the mobile device via layer 3 or higher layer control signaling according to the transmission standard. For example, a layer 3 RRC configuration message may comprise the information 331 about the selected waveform format.

Generally speaking, some examples relate to a means for selecting a waveform format used by a mobile device for an uplink communication with the means. The means for selecting a waveform format comprises a means for receiving information from the mobile device that the mobile device supports at least two different waveform formats for uplink communication according to a transmission standard. Further, the means for selecting a waveform format comprises a means for selecting one of the at least two different waveform formats for uplink communication. The means for selecting a waveform format additionally comprises a means for transmitting information about the selected waveform format for uplink communication to the mobile device.

In some examples, the means for transmitting information to the mobile device may be further configured to transmit the information about the selected waveform format to the mobile device via layer 1 or layer 2 control signaling according to the transmission standard.

The means for selecting a waveform format may be implemented by a base station described above or below (e.g. Fig. 3). The means for receiving information from the mobile device may be implemented by a receiver described above or below (e.g. Fig. 3). The means for selecting one of the at least two different waveform formats for uplink communication may be implemented by a selection circuit described above or below (e.g. Fig. 3). The means for transmitting information about the selected waveform format for uplink communication to the mobile device may be implemented by a transmitter described above or below (e.g. Fig. 3).

While in the foregoing a network centric concept for selecting a waveform format used by a mobile device for an uplink communication with a base station is described, a mobile device centric concept is described in the following with reference to Figs. 4 to 6.

**Fig. 4** illustrates a method 400 in a mobile device for selecting a waveform format used by the mobile device for an uplink communication with a base station. The method 400 comprises transmitting 402 information to the base station that the mobile device supports at least two different waveform formats for uplink communication according to a transmission standard. Further, the method 400 comprises selecting 404 one of the at least two different waveform formats for uplink communication. The method 400 additionally comprises transmitting 406 information about the selected waveform format for uplink communication to the base station.

The method 400 may allow to select and reconfigure the waveform format used by a mobile device supporting multiple wave formats. Method 400 may enable the mobile device to select the preferred waveform format for uplink communication. The selection may further consider design limitations (i.e. the supported waveform formats) of the mobile device. After transmitting the information about the selected waveform format for uplink communication to the base station, the mobile device may transmit the remaining uplink data to the base station using the selected waveform format. This additional degree of freedom may allow to improve a QoS / QoE for a user of the mobile device. Additionally, power efficiency of the mobile device may be improved since different waveform formats may exhibit different transmission power characteristics.

In some examples, selecting 404 one of the at least two different waveform formats for uplink communication may comprise transmitting uplink data to the base station using different ones of the at least two supported waveform formats for uplink communication. Further, selecting 404 one of the at least two different waveform formats for uplink communication may comprise receiving, from the base station, information about a respective receive performance for the waveform formats for uplink communication. The information about the respective receive performance for the waveform formats for uplink communication is based on the uplink data. Selecting 404 one of the at least two different waveform formats for uplink communication may additionally comprise selecting, based on the information about the respective receive performance, one of the used waveform formats for uplink communication as the selected waveform format for uplink communication.

For example, during the start phase of an uplink communication (uplink data transmission), the mobile device may use different ones of the at least two supported waveform formats for uplink communication. By comparing the received receive performances (e.g. Block Error Ratio, BLER), the waveform format exhibiting the best receive performance may be selected as selected waveform format for uplink communication. Accordingly, the method 400 may allow the mobile device to select the waveform format for uplink communication that currently exhibits the best transmission quality.

Alternatively, selecting 404 one of the at least two different waveform formats for uplink communication may comprise transmitting uplink data to the base station using one of the at least two supported waveform formats for uplink communication. Further, selecting 404 one of the at least two different waveform formats for uplink communication may comprise receiving, from the base station, information about a receive performance for the one waveform format for uplink communication. The information about the receive performance is based on the uplink data. Selecting 404 one of the at least two different waveform formats for uplink communication may additionally comprise comparing the receive performance to a quality indicator.

That is, according to method 400, the mobile device may transmit uplink data using a first one of the supported waveform formats. Based on a comparison of the received receive performance for the used waveform format with the quality indicator, the mobile device may further decide, whether or not the first one of the supported waveform formats is suitable for the current uplink communication. The quality indicator may, e.g., be a minimum receive performance to be met by the waveform format, or a receive performance range to be met by the waveform format

If the receive performance meets the quality indicator, selecting 404 one of the at least two different waveform formats for uplink communication may further comprise selecting the one waveform format for uplink communication as selected waveform format for uplink communication. That is, if the first one of the supported waveform formats is considered suitable for the current uplink communication by the mobile device, the mobile device may right away use this waveform format for the remaining uplink communication.

If the receive performance does not meet the quality indicator, selecting 404 one of the at least two different waveform formats for uplink communication may further comprise transmitting further uplink data to the base station using another one of the at least two supported waveform formats for uplink communication. That is, if the first one of the supported waveform formats is not considered suitable for the current uplink communication by the mobile device, the mobile device may try another supported waveform format.

Accordingly, the mobile device may iteratively use different ones of the at least two supported waveform formats for uplink communication until a waveform format is selected that is considered suitable for the current uplink communication by the mobile device. Compared to the above-mentioned approach, in which uplink data is transmitted from the mobile device to the base station using different waveform formats, a number of waveform formats that is tested for determining the selected waveform format for uplink communication may be reduced. For example, already the first one of the at least two supported waveform formats for uplink communication may be considered suitable by the mobile device. Accordingly, no other supported waveform formats need to be tested.

In some examples, selecting 404 one of the at least two different waveform formats for uplink communication may alternatively comprise calculating a required signal power of an uplink signal to the base station for one of the at least two supported waveform formats for uplink communication. Further, selecting 404 one of the at least two different waveform formats for uplink communication may comprise calculating a PAPR of the uplink signal based on the required signal power. Selecting 404 one of the at least two different waveform formats for uplink communication may additionally comprise comparing the PAPR to a quality indicator.

That is, the mobile device may calculate signal parameters of the uplink signal for a specific waveform format and compare it to a quality indicator. The quality indicator may denote a maximum PAPR to be met by the waveform format, or a PAPR range to be met by the waveform format. This may allow a trade-off between the signal power and the PAPR of the uplink signal.

If the PAPR meets the quality indicator, selecting 404 one of the at least two different waveform formats for uplink communication may further comprise, selecting the one waveform format for uplink communication as selected waveform format for uplink communication. That is, if the first one of the supported waveform formats is considered suitable for the current uplink communication by the mobile device, the mobile device may right away use this waveform format for the remaining uplink communication.

If the PAPR does not meet the quality indicator, selecting 404 one of the at least two different waveform formats for uplink communication may further comprise calculating another PAPR of the uplink signal based on another required signal power for another one of the at least two supported waveform formats for uplink communication. That is, if the first one of the supported waveform formats is not considered suitable for the current uplink communication by the mobile device, the mobile device may calculates the signal parameters for another supported waveform format.

Accordingly, the mobile device may iteratively calculate the PAPR for different ones of the at least two supported waveform formats for uplink communication until a waveform format is selected that is considered suitable for the current uplink communication by the mobile device.

Transmitting 406 information about the selected waveform format to the base station may, in some examples, comprise transmitting the information about the selected waveform format to the base station via layer 1 or layer 2 control signaling according to the transmission standard.

For example, transmitting 406 the information about the selected waveform format to the base station via layer 1 or layer 2 control signaling according to the transmission standard may comprise transmitting, to the base station, a specific DeModulation Reference Signal (DMRS) that is assigned to the selected waveform format. The base station may, hence, determine the selected waveform format by blindly detecting the DMRS.

In some examples, layer 1 control signaling related to a scheduling of uplink resources to the mobile device may comprise the information about the selected waveform format. The layer 1 control signaling related to a scheduling of uplink resources to the mobile device is a signaling from the mobile device to the base station for requesting the grant (assignment) of uplink resources to the mobile device. For example, one or more bits (depending on the number of supported waveform formats) may be defined in the layer 1 control signaling related to a scheduling of uplink resources to the mobile device that indicate the selected waveform format for the uplink communication. This may enable to select the waveform format (and inform the mobile device) on a transmission time interval basis. Hence, using layer 1 control signaling related to a scheduling of uplink resources to the mobile device may allow dynamic waveform (format) signaling.

Alternatively, layer 2 control signaling related to a status of a buffer carrying uplink data comprises the information about the selected waveform format. The layer 2 control signaling related to a status of a buffer carrying uplink data is a signaling from the mobile device to the base station that indicates that the mobile device holds uplink data for transmission to the base station. Using layer 2 control signaling related to a status of a buffer carrying uplink data may allow to inform the base station about the selected waveform format on MAC layer. Hence, also using layer 2 control signaling related to a status of a buffer carrying uplink data may allow dynamic waveform (format) signaling.

In some examples, transmitting 406 information about the selected waveform format to the base station may alternatively comprise transmitting the information about the selected waveform format to the base station via layer 3 or higher layer control signaling according to the transmission standard. For example, a layer 3 RRC (re-)configuration message may comprise the information about the selected waveform format. This may allow a semi-static waveform (format) signaling.

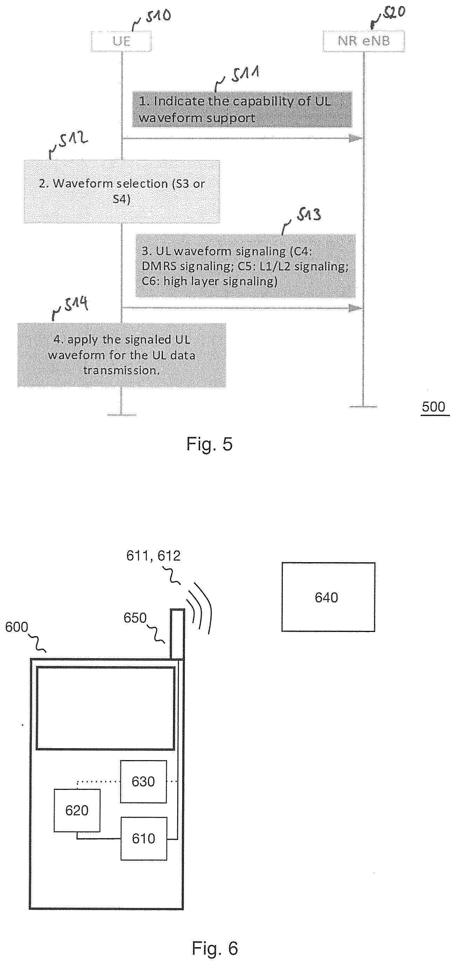

In **Fig. 5**, an exemplary signaling sequence 500 between a mobile device and a base station in accordance with method 400 is illustrated.

For example, after the mobile device 510 accomplishes the initial access to the communication network (represented by base station 520) and establishes the RRC connection, the mobile device signals 511 its capability of supporting multiple uplink waveforms (waveform formats) to the network.

Then, the mobile device 510 autonomously selects the preferred uplink waveform (format) by applying one of the above-mentioned approaches. For example, a mobile device initiated waveform training (S3) may be employed. During the starting phase of uplink data transmission, the mobile device may alternatively select different uplink waveforms. Based on the average receive performance of data packets associated with the respective waveform, the mobile device may decide on the preferred uplink waveform for the rest of the data transmission. Alternatively, a transmit signal based selection (S4) may be employed. The mobile device first calculates the required transmit power of a transmitted signal based on, e.g., CP-OFDM modulation and the required power back off depending on the resulting PAPR. For example, if the PAPR required back off cannot be achieved in the combination of required transmit power and CP-OFDM, the mobile device may determine which particular other waveforms to be used since these waveforms have the capability to provide the required transmit power for the link.

After the selection 512 of the uplink waveform, the mobile device 510 further signals the selected uplink waveform to the base station 520 (e.g. an eNodeB) using one of the above-mentioned approaches. For example, the mobile device 510 may dynamically or semi-statically signal the selected uplink waveform to the network by using layer 1 / layer 2 uplink control signaling or high layer signaling. In some examples, DMRS signaling (C4) may be used. Different uplink DMRS for different uplink waveforms may be specified in the transmission standard. Based on the selected waveform, the mobile device 510 uses the associated DMRS to indicate the waveform. The base station 520 blindly detects the uplink DMRS in order to determine the uplink waveform adopted in the current uplink data transmission. Alternatively, layer 1 / layer 2 signaling (C5) may be used. For example, uplink layer 1 scheduling request signaling, or layer 2 buffer status reporting may indicate the selected uplink waveform to the network. Further alternatively, high layer signaling (C6) may be employed. The mobile device 510 may, e.g., use a RRC (re-)configuration message to signal the selected uplink waveform to the network.

With the acknowledgement of the reception of the selected uplink waveform from the base station 520, the mobile device 510 transmits 514 the uplink data packet to the network by using the selected uplink waveform.

An implementation of a mobile device according to the proposed concept is illustrated in **Fig. 6.** Fig. 6 illustrates a mobile device 600 for selecting a waveform format used by the mobile device 600 for an uplink communication with a base station 640. The mobile device 600 comprises a transmitter 610 configured to transmit information 611 to the base station 640 that the mobile device 600 supports at least two different waveform formats for uplink communication according to a transmission standard. Further, the mobile device 600 comprises a selection circuit 620 configured to select one of the at least two different waveform formats for uplink communication. The transmitter 610 is further configured to transmit information 612 about the selected waveform format for uplink communication to the base station 640.

The mobile device 600 may allow to select and reconfigure the waveform format used by the mobile device 600. The mobile device 600 may select the preferred waveform format for uplink communication. The selection may further consider design limitations (i.e. the supported waveform formats) of the mobile device 600. After transmitting the information about the selected waveform format for uplink communication to the base station, the mobile device 600 may transmit the remaining uplink data to the base station using the selected waveform format. This additional degree of freedom may allow to improve a QoS / QoE for a user of the mobile device 600. Additionally, power efficiency of the mobile device 600 may be improved since different waveform formats may exhibit different transmission power characteristics.

More details and aspects of the mobile device 600 are mentioned in connection with the proposed concept or one or more examples described above (e.g. Figs. 4 and 5). The mobile device 600 or its components may be configured to perform one or more additional optional features corresponding to one or more aspects of the proposed concept or one or more examples described above.

For example, the transmitter 610 may be further configured to transmit uplink data to the base station 640 using different ones of the at least two supported waveform formats for uplink communication. The mobile device 600 may further comprise a receiver 630 configured to receive, from the base station 640, information about a respective receive performance for the waveform formats for uplink communication. The information about the respective receive performance for the waveform formats for uplink communication is based on the uplink data. The selection circuit 620 may be further configured to select, based on the information about the respective receive performance, one of the used waveform formats for uplink communication as the selected waveform format for uplink communication.

Alternatively, the transmitter 610 may be further configured to transmit uplink data to the base station 640 using one of the at least two supported waveform formats for uplink communication. The receiver 630 may, then, be configured to receive, from the base station 640, information about a receive performance for the one waveform format for uplink communication. The information about the receive performance is based on the uplink data. The selection circuit 620 may be further configured to compare the receive performance to a quality indicator.

If the receive performance meets the quality indicator, the selection circuit 620 may be further configured to select the one waveform format for uplink communication as selected waveform format for uplink communication. If the receive performance does not meet the quality indicator, the transmitter 610 may be configured to transmit further uplink data to the base station 640 using another one of the at least two supported waveform formats for uplink communication.

In some examples, the selection circuit 620 may be further configured to calculate a required signal power of an uplink signal to the base station 640 for one of the at least two supported waveform formats for uplink communication. The selection circuit 620 may be further configured to calculate a PAPR of the uplink signal based on the required signal power. Further, the selection circuit 620 may be further configured to compare the PAPR to a quality indicator.

If the PAPR meets the quality indicator, the selection circuit 620 may be further configured to select the one waveform format for uplink communication as selected waveform format for uplink communication. If the PAPR does not meet the quality indicator, the selection circuit 620 may be further configured to calculate another PAPR of the uplink signal based on another required signal power for another one of the at least two supported waveform formats for uplink communication.

The transmitter 610 may, e.g., be configured to transmit the information 612 about the selected waveform format to the base station 640 via layer 1 or layer 2 control signaling according to the transmission standard.

For example, the transmitter 610 may be configured to transmit, to the base station 640, a specific DMRS that is assigned to the selected waveform format. Alternatively, layer 1 control signaling related to a scheduling of uplink resources to the mobile device 600 may comprise the information 612 about the selected waveform format. Further alternatively, layer 2 control signaling related to a status of a buffer (of the mobile device 600) carrying uplink data may comprise the information 612 about the selected waveform format.

In some examples, the transmitter 610 may be configured to transmit the information 612 about the selected waveform format to the base station 640 via layer 3 or higher layer control signaling according to the transmission standard. For example, a layer 3 radio resource control configuration message may comprise the information 612 about the selected waveform format.

As indicated in Fig. 6, the transmitter 610 as well as the receiver 630 may be coupled to an antenna element 650 of the mobile device 600.

Generally speaking, some examples relate to a means for selecting a waveform format used by the means for an uplink communication with a base station. The means for selecting a waveform format comprises a means for transmitting information to the base station that the means supports at least two different waveform formats for uplink communication according to a transmission standard. Further, the means for selecting a waveform format comprises a means for selecting one of the at least two different waveform formats for uplink communication. The means for transmitting information to the base station is further configured to transmit information about the selected waveform format for uplink communication to the base station.

In some examples, the means for transmitting information to the base station may be further configured to transmit the information about the selected waveform format to the base station via layer 1 or layer 2 control signaling according to the transmission standard.

The means for selecting a waveform format may be implemented by a mobile device described above or below (e.g. Fig. 6). The means for transmitting information to the base station may be implemented by a transmitter described above or below (e.g. Fig. 6). The means for selecting one of the at least two different waveform formats for uplink communication may be implemented by a selection circuit described above or below (e.g. Fig. 6).

The present disclosure proposes methods for selecting and reconfiguring the uplink waveform (format) for a mobile device with multiple uplink waveforms capability.

The proposed methods may enable the network or the mobile device to select the preferred uplink waveform according to link or system level performance metric, considering design limitations of the mobile device. The additional degree of freedom stemming from multiple uplink waveforms may offer additional performance improvements in the system in terms of QoS / QoE, power efficiency and so on. Moreover, different methods may offer the possibility of reconfiguring uplink waveform on different time scales. They may be beneficial in different scenarios or use cases. For instance, in a scenario with low mobility and less traffic variation, a semi-static type of waveform reconfiguration may be more appropriate. And dynamic signaling for waveform may be more suitable for a scenario with fast channel and/or traffic variation.

The examples as described herein may be summarized as follows:
Example 1 is a method in a base station for selecting a waveform format used by a mobile device for an uplink communication with the base station, comprising: receiving information from the mobile device about at least two different waveform formats supported by the mobile device for uplink communication according to a transmission standard; selecting one of the at least two different waveform formats for uplink communication by the mobile device; and transmitting information about the selected waveform format for uplink communication to the mobile device.
In example 2, selecting one of the at least two different waveform formats for uplink communication in the method of example 1 comprises: transmitting control information to the mobile device, the control information comprising an instruction for the mobile device to transmit uplink data to the base station using different ones of the at least two supported waveform formats for uplink communication; calculating a respective receive performance for the waveform formats for uplink communication based on the uplink data received from the mobile device; and selecting, based on the calculated receive performances, one of the waveform formats for uplink communication as the selected waveform format for uplink communication.
In example 3, selecting one of the at least two different waveform formats for uplink communication in the method of example 1 comprises: transmitting control information to the mobile device, the control information comprising an instruction for the mobile device to transmit uplink data to the base station using one of the at least two supported waveform formats for uplink communication; calculating a receive performance for the one waveform format for uplink communication based on the uplink data received from the mobile device; and comparing the receive performance to a quality indicator.
In example 4, selecting one of the at least two different waveform formats for uplink communication in the method of example 3 further comprises: selecting the one waveform format for uplink communication as selected waveform format for uplink communication, if the receive performance meets the quality indicator; or transmitting further control information to the mobile device, if the receive performance does not meet the quality indicator, wherein the further control information comprises an instruction for the mobile device to transmit uplink data to the base station using another one of the at least two supported waveform formats for uplink communication.
In example 5, selecting one of the at least two different waveform formats for uplink communication in the method of example 1 is based on available context information, wherein the context information is information that affects the uplink communication between the mobile device and the base station.
In example 6, transmitting information about the selected waveform format to the mobile device in the method of any of the preceding examples comprises: transmitting the information about the selected waveform format to the mobile device via layer 1 or layer 2 control signaling according to the transmission standard.
In example 7, layer 1 control signaling related to a grant of uplink resources to the mobile device comprises the information about the selected waveform format in the method of example 6.
In example 8, specific layer 1 control signaling dedicated to controlling the waveform format for uplink communication comprises the information about the selected waveform format in the method of example 6.
In example 9, transmitting information about the selected waveform format to the mobile device in the method of any of examples 1 to 5 comprises: transmitting the information about the selected waveform format to the mobile device via layer 3 or higher layer control signaling according to the transmission standard.
In example 10, a layer 3 radio resource control configuration message comprises the information about the selected waveform format in the method of example 9.
Example 11 is a method in a mobile device for selecting a waveform format used by the mobile device for an uplink communication with a base station, comprising: transmitting information to the base station that the mobile device supports at least two different waveform formats for uplink communication according to a transmission standard; selecting one of the at least two different waveform formats for uplink communication; and transmitting information about the selected waveform format for uplink communication to the base station.
In example 12, selecting one of the at least two different waveform formats for uplink communication in the method of example 11 comprises: transmitting uplink data to the base station using different ones of the at least two supported waveform formats for uplink communication; receiving, from the base station, information about a respective receive performance for the waveform formats for uplink communication, wherein the information about the respective receive performance for the waveform formats for uplink communication is based on the uplink data; and selecting, based on the information about the respective receive performance, one of the used waveform formats for uplink communication as the selected waveform format for uplink communication.
In example 13, selecting one of the at least two different waveform formats for uplink communication in the method of example 11 comprises: transmitting uplink data to the base station using one of the at least two supported waveform formats for uplink communication; receiving, from the base station, information about a receive performance for the one waveform format for uplink communication, wherein the information about the receive performance is based on the uplink data; and comparing the receive performance to a quality indicator.
In example 14, selecting one of the at least two different waveform formats for uplink communication in the method of example 13 further comprises: selecting the one waveform format for uplink communication as selected waveform format for uplink communication, if the receive performance meets the quality indicator; or transmitting further uplink data to the base station using another one of the at least two supported waveform formats for uplink communication, if the receive performance does not meet the quality indicator.
In example 15, selecting one of the at least two different waveform formats for uplink communication in the method of example 11 comprises: calculating a required signal power of an uplink signal to the base station for one of the at least two supported waveform formats for uplink communication; calculating a peak-to-average power ratio of the uplink signal based on the required signal power; and comparing the peak-to-average power ratio to a quality indicator.
In example 16, selecting one of the at least two different waveform formats for uplink communication in the method of example 15 further comprises: selecting the one waveform format for uplink communication as selected waveform format for uplink communication, if the peak-to-average power ratio meets the quality indicator; or calculating another peak-to-average power ratio of the uplink signal based on another required signal power for another one of the at least two supported waveform formats for uplink communication, if the peak-to-average power ratio does not meet the quality indicator.
In example 17, transmitting information about the selected waveform format to the base station in the method of any of examples 11 to 16 comprises: transmitting the information about the selected waveform format to the base station via layer 1 or layer 2 control signaling according to the transmission standard.
In example 18, transmitting the information about the selected waveform format to the base station via layer 1 or layer 2 control signaling according to the transmission standard in the method of example 17 comprises: transmitting, to the base station, a specific demodulation reference signal that is assigned to the selected waveform format.
In example 19, layer 1 control signaling related to a scheduling of uplink resources to the mobile device comprises the information about the selected waveform format in the method of example 17.
In example 20, layer 2 control signaling related to a status of a buffer carrying uplink data comprises the information about the selected waveform format in the method of example 17.
In example 21, transmitting information about the selected waveform format to the base station in the method of any of examples 11 to 16 comprises: transmitting the information about the selected waveform format to the base station via layer 3 or higher layer control signaling according to the transmission standard.
In example 22, a layer 3 radio resource control configuration message comprises the information about the selected waveform format in the method of example 21.
Example 23 is a computer readable storage medium having stored thereon a program having a program code for performing the method of any of examples 1 to 10, or the method of any of examples 11 to 22, when the program is executed on a computer or processor.
Example 24 is a computer program having a program code configured to perform the method of any of examples 1 to 10, or the method of any of examples 11 to 22, when the computer program is executed on a computer or processor.
Example 25 is a base station for selecting a waveform format used by a mobile device for an uplink communication with the base station, comprising: a receiver configured to receive information from the mobile device about at least two different waveform formats supported by the mobile device for uplink communication according to a transmission standard; a selection circuit configured to select one of the at least two different waveform formats for uplink communication by the mobile device; and a transmitter configured to transmit information about the selected waveform format for uplink communication to the mobile device.
In example 26, the transmitter in the base station of example 25 is further configured to transmit control information to the mobile device, the control information comprising an instruction for the mobile device to transmit uplink data to the base station using different ones of the at least two supported waveform formats for uplink communication; the selection circuit is further configured to calculate a respective receive performance for the waveform formats for uplink communication based on the uplink data received from the mobile device; and the selection circuit is further configured to select, based on the calculated receive performances, one of the used waveform formats for uplink communication as the selected waveform format for uplink communication.
In example 27, the transmitter in the base station of example 25 is further configured to transmit control information to the mobile device, the control information comprising an instruction for the mobile device to transmit uplink data to the base station using one of the at least two supported waveform formats for uplink communication; the selection circuit is further configured to calculate a receive performance for the one waveform format for uplink communication based on the uplink data received from the mobile device; and the selection circuit is further configured to compare the receive performance to a quality indicator.
In example 28, the selection circuit in the base station of example 25 is further configured to select the one waveform format for uplink communication as selected waveform format for uplink communication, if the receive performance meets the quality indicator; or the transmitter is configured to transmit further control information to the mobile device, if the receive performance does not meet the quality indicator, wherein the further control information comprises an instruction for the mobile device to transmit uplink data to the base station using another one of the at least two supported waveform formats for uplink communication.
In example 29, the selection circuit in the base station of example 25 is configured to select the one of the at least two different waveform formats for uplink communication based on available context information, wherein the context information is information that affects the uplink communication between the mobile device and the base station.
In example 30, the transmitter in the base station of any of the preceding examples is further configured to transmit the information about the selected waveform format to the mobile device via layer 1 or layer 2 control signaling according to the transmission standard.
In example 31, layer 1 control signaling related to a grant of uplink resources to the mobile device comprises the information about the selected waveform format in the base station of example 30.
In example 32, specific layer 1 control signaling dedicated to controlling the waveform format for uplink communication comprises the information about the selected waveform format in the base station of example 30.
In example 33, the transmitter in the base station of any of examples 24 to 29 is further configured to transmit the information about the selected waveform format to the mobile device via layer 3 or higher layer control signaling according to the transmission standard.
In example 34, a layer 3 radio resource control configuration message comprises the information about the selected waveform format in the base station of example 33.
Example 35 is a mobile device for selecting a waveform format used by the mobile device for an uplink communication with a base station, comprising: a transmitter configured to transmit information to the base station that the mobile device supports at least two different waveform formats for uplink communication according to a transmission standard; and a selection circuit configured to select one of the at least two different waveform formats for uplink communication, wherein the transmitter is further configured to transmit information about the selected waveform format for uplink communication to the base station.
In example 36, the transmitter in the mobile device of example 35 is further configured to transmit uplink data to the base station using different ones of the at least two supported waveform formats for uplink communication; the mobile device further comprises a receiver configured to receive, from the base station, information about a respective receive performance for the waveform formats for uplink communication, wherein the information about the respective receive performance for the waveform formats for uplink communication is based on the uplink data; and the selection circuit is further configured to select, based on the information about the respective receive performance, one of the used waveform formats for uplink communication as the selected waveform format for uplink communication.
In example 37, the transmitter in the mobile device of example 35 is further configured to transmit uplink data to the base station using one of the at least two supported waveform formats for uplink communication; the mobile device further comprises a receiver configured to receive, from the base station, information about a receive performance for the one waveform format for uplink communication, wherein the information about the receive performance is based on the uplink data; and the selection circuit is further configured to compare the receive performance to a quality indicator.
In example 38, the selection circuit in the mobile device of example 37 is further configured to select the one waveform format for uplink communication as selected waveform format for uplink communication, if the receive performance meets the quality indicator; or the transmitter is configured to transmit further uplink data to the base station using another one of the at least two supported waveform formats for uplink communication, if the receive performance does not meet the quality indicator.
In example 39, the selection circuit in the mobile device of example 35 is further configured to: calculate a required signal power of an uplink signal to the base station for one of the at least two supported waveform formats for uplink communication; calculate a peak-to-average power ratio of the uplink signal based on the required signal power; and compare the peak-to-average power ratio to a quality indicator.
In example 40, the selection circuit in the mobile device of example 39 is further configured to: select the one waveform format for uplink communication as selected waveform format for uplink communication, if the peak-to-average power ratio meets the quality indicator; or calculate another peak-to-average power ratio of the uplink signal based on another required signal power for another one of the at least two supported waveform formats for uplink communication, if the peak-to-average power ratio does not meet the quality indicator.
In example 41, the transmitter in the mobile device of any of examples 35 to 40 is further configured to transmit the information about the selected waveform format to the base station via layer 1 or layer 2 control signaling according to the transmission standard.
In example 42, the transmitter in the mobile device of example 41 is further configured to transmit, to the base station, a specific demodulation reference signal that is assigned to the selected waveform format.
In example 43, layer 1 control signaling related to a scheduling of uplink resources to the mobile device comprises the information about the selected waveform format in the mobile device of example 41.
In example 44, layer 2 control signaling related to a status of a buffer carrying uplink data comprises the information about the selected waveform format in the mobile device of example 41.
In example 45, the transmitter in the mobile device of any of examples 35 to 40 is further configured to transmit the information about the selected waveform format to the base station via layer 3 or higher layer control signaling according to the transmission standard.
In example 46, a layer 3 radio resource control configuration message comprises the information about the selected waveform format in the mobile device of example 45.
Example 47 is a means for selecting a waveform format used by a mobile device for an uplink communication with the means, comprising: a means for receiving information from the mobile device that the mobile device supports at least two different waveform formats for uplink communication according to a transmission standard; a means for selecting one of the at least two different waveform formats for uplink communication; and a means for transmitting information about the selected waveform format for uplink communication to the mobile device.
In example 48, the means for transmitting information to the mobile device in the means of example 47 is further configured to transmit the information about the selected waveform format to the mobile device via layer 1 or layer 2 control signaling according to the transmission standard.
Example 49 is a means for selecting a waveform format used by the means for an uplink communication with a base station, comprising: a means for transmitting information to the base station that the means supports at least two different waveform formats for uplink communication according to a transmission standard; and a means for selecting one of the at least two different waveform formats for uplink communication, wherein the means for transmitting information to the base station is further configured to transmit information about the selected waveform format for uplink communication to the base station.
In example 50, the means for transmitting information to the base station in the means of example 49 is further configured to transmit the information about the selected waveform format to the base station via layer 1 or layer 2 control signaling according to the transmission standard.

The aspects and features mentioned and described together with one or more of the previously detailed examples and figures, may as well be combined with one or more of the other examples in order to replace a like feature of the other example or in order to additionally introduce the feature to the other example.

Examples may further be or relate to a computer program having a program code for performing one or more of the above methods, when the computer program is executed on a computer or processor. Steps, operations or processes of various above-described methods may be performed by programmed computers or processors. Examples may also cover program storage devices such as digital data storage media, which are machine, processor or computer readable and encode machine-executable, processor-executable or computer-executable programs of instructions. The instructions perform or cause performing some or all of the acts of the above-described methods. The program storage devices may comprise or be, for instance, digital memories, magnetic storage media such as magnetic disks and magnetic tapes, hard drives, or optically readable digital data storage media. Further examples may also cover computers, processors or control units programmed to perform the acts of the above-described methods or (field) programmable logic arrays ((F)PLAs) or (field) programmable gate arrays ((F)PGAs), programmed to perform the acts of the above-described methods.

The description and drawings merely illustrate the principles of the disclosure. Furthermore, all examples recited herein are principally intended expressly to be only for pedagogical purposes to aid the reader in understanding the principles of the disclosure and the concepts contributed by the inventor(s) to furthering the art.

A functional block denoted as "means for ..." performing a certain function may refer to a circuit that is configured to perform a certain function. Hence, a "means for s.th." may be implemented as a "means configured to or suited for s.th.", such as a device or a circuit configured to or suited for the respective task.

Functions of various elements shown in the figures, including any functional blocks labeled as "means", "means for providing a sensor signal", "means for generating a transmit signal.", etc., may be implemented in the form of dedicated hardware, such as "a signal provider", "a signal processing unit", "a processor", "a controller", etc. as well as hardware capable of executing software in association with appropriate software. When provided by a processor, the functions may be provided by a single dedicated processor, by a single shared processor, or by a plurality of individual processors, some of which or all of which may be shared. However, the term "processor" or "controller" is by far not limited to hardware exclusively capable of executing software, but may include digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included.

A block diagram may, for instance, illustrate a high-level circuit diagram implementing the principles of the disclosure. Similarly, a flow chart, a flow diagram, a state transition diagram, a pseudo code, and the like may represent various processes, operations or steps, which may, for instance, be substantially represented in computer readable medium and so executed by a computer or processor, whether or not such computer or processor is explicitly shown. Methods disclosed in the specification or in the claims may be implemented by a device having means for performing each of the respective acts of these methods.

It is to be understood that the disclosure of multiple acts, processes, operations, steps or functions disclosed in the specification or claims may not be construed as to be within the specific order, unless explicitly or implicitly stated otherwise, for instance for technical reasons. Therefore, the disclosure of multiple acts or functions will not limit these to a particular order unless such acts or functions are not interchangeable for technical reasons. Furthermore, in some examples a single act, function, process, operation or step may include or may be broken into multiple sub-acts, -functions, -processes, -operations or -steps, respectively. Such sub acts may be included and part of the disclosure of this single act unless explicitly excluded.

## Claims

1. A method (100) in a base station for selecting a waveform format used by a mobile device for an uplink communication with the base station, comprising:
receiving (102) information from the mobile device about at least two different waveform formats supported by the mobile device for uplink communication according to a transmission standard;
selecting (104) one of the at least two different waveform formats for uplink communication by the mobile device; and
transmitting (106) information about the selected waveform format for uplink communication to the mobile device,
wherein selecting (104) one of the at least two different waveform formats for uplink communication comprises:
transmitting control information to the mobile device, the control information comprising an instruction for the mobile device to transmit uplink data to the base station using different ones of the at least two supported waveform formats for uplink communication;
calculating a receive performance for each of the different ones of the at least two waveform formats for uplink communication based on the uplink data received from the mobile device and comparing the calculated receive performances; and
selecting, based on the comparison of the calculated receive performances, one of the waveform formats for uplink communication as the selected waveform format for uplink communication.

2. The method of claim 1, wherein selecting (104) one of the at least two different waveform formats for uplink communication is based on available context information, wherein the context information is information that affects the uplink communication between the mobile device and the base station.

3. The method of any of the preceding claims, wherein transmitting (106) information about the selected waveform format to the mobile device comprises:
transmitting the information about the selected waveform format to the mobile device via layer 1 or layer 2 control signaling according to the transmission standard.

4. The method of claim 3, wherein layer 1 control signaling related to a grant of uplink resources to the mobile device comprises the information about the selected waveform format.

5. The method of claim 3, wherein specific layer 1 control signaling dedicated to controlling the waveform format for uplink communication comprises the information about the selected waveform format.

6. The method of any of claims 1 to 2, wherein transmitting (106) information about the selected waveform format to the mobile device comprises:
transmitting the information about the selected waveform format to the mobile device via layer 3 or higher layer control signaling according to the transmission standard.

7. The method of claim 6, wherein a layer 3 radio resource control configuration message comprises the information about the selected waveform format.

8. A base station (300) for selecting a waveform format used by a mobile device (340) for an uplink communication with the base station (300), comprising:
a receiver (310) configured to receive information (341) from the mobile device (340) about at least two different waveform formats supported by the mobile device (340) for uplink communication according to a transmission standard;
a selection circuit (320) configured to select one of the at least two different waveform formats for uplink communication by the mobile device (340); and
a transmitter (330) configured to transmit information (331) about the selected waveform format for uplink communication to the mobile device (340),
wherein the transmitter (330) is further configured to transmit control information to the mobile device (340), the control information comprising an instruction for the mobile device (340) to transmit uplink data to the base station using different ones of the at least two supported waveform formats for uplink communication;
the selection circuit (320) is further configured to calculate a receive performance for each of the at least two waveform formats for uplink communication based on the uplink data received from the mobile device (340) and compare the calculated receive performances; and
the selection circuit (320) is further configured to select, based on the comparison of the calculated receive performances, one of the used waveform formats for uplink communication as the selected waveform format for uplink communication.

9. The base station of claim 8, wherein the selection circuit (320) is configured to select the one of the at least two different waveform formats for uplink communication based on available context information, wherein the context information is information that affects the uplink communication between the mobile device (340) and the base station.

## Patentansprüche

1. Verfahren (100) in einer Basisstation zum Auswählen eines durch eine mobile Vorrichtung für eine Aufwärtsstreckenkommunikation mit der Basisstation verwendeten Wellenformformats, umfassend:
Empfangen (102) von Information von der mobilen Vorrichtung über mindestens zwei unterschiedliche Wellenformformate, die durch die mobile Vorrichtung für eine Aufwärtsstreckenkommunikation gemäß einem Übertragungsstandard unterstützt werden;
Auswählen (104) eines der mindestens zwei unterschiedlichen Wellenformformate für eine Aufwärtsstreckenkommunikation durch die mobile Vorrichtung; und
Übertragen (106) von Information über das ausgewählte Wellenformformat für eine Aufwärtsstreckenkommunikation an die mobile Vorrichtung,
wobei das Auswählen (104) eines der mindestens zwei unterschiedlichen Wellenformformate für eine Aufwärtsstreckenkommunikation umfasst:
Übertragen von Steuerinformation an die mobile Vorrichtung, wobei die Steuerinformation eine Anweisung für die mobile Vorrichtung zum Übertragen von Aufwärtsstreckendaten an die Basisstation unter Verwendung unterschiedlicher der mindestens zwei unterstützten Wellenformformate für eine Aufwärtsstreckenkommunikation umfasst;
Berechnen einer Empfangsleistung für jedes der unterschiedlichen der mindestens zwei Wellenformformate für eine Aufwärtsstreckenkommunikation basierend auf den von der mobilen Vorrichtung empfangenen Aufwärtsstreckendaten und Vergleichen der berechneten Empfangsleistungen; und
Auswählen, basierend auf dem Vergleich der berechneten Empfangsleistungen, eines der Wellenformformate für eine Aufwärtsstreckenkommunikation als das ausgewählte Wellenformformat für eine Aufwärtsstreckenkommunikation.

2. Verfahren nach Anspruch 1, wobei das Auswählen (104) eines der mindestens zwei unterschiedlichen Wellenformformate für eine Aufwärtsstreckenkommunikation auf verfügbarer Kontextinformation basiert, wobei die Kontextinformation eine Information ist, die die Aufwärtsstreckenkommunikation zwischen der mobilen Vorrichtung und der Basisstation beeinflusst.

3. Verfahren nach einem der vorhergehenden Ansprüche, wobei das Übertragen (106) von Information über das ausgewählte Wellenformformat an die mobile Vorrichtung umfasst:
Übertragen der Information über das ausgewählte Wellenformformat an die mobile Vorrichtung über Schicht-1- oder Schicht-2-Steuersignale gemäß dem Übertragungsstandard.

4. Verfahren nach Anspruch 3, wobei Schicht-1-Steuersignale in Zusammenhang mit einer Gewährung von Aufwärtsstreckenressourcen für die mobile Vorrichtung die Information über das ausgewählte Wellenformformat umfassen.

5. Verfahren nach Anspruch 3, wobei spezifische, für ein Steuern des Wellenformformats für eine Aufwärtsstreckenkommunikation dedizierte Schicht-1-Steuersignale die Information über das ausgewählte Wellenformformat umfassen.

6. Verfahren nach einem der Ansprüche 1 bis 2, wobei das Übertragen (106) von Information über das ausgewählte Wellenformformat an die mobile Vorrichtung umfasst:
Übertragen der Information über das ausgewählte Wellenformformat an die mobile Vorrichtung über Schicht-3-Steuersignale oder Steuersignale einer höheren Schicht gemäß dem Übertragungsstandard.

7. Verfahren nach Anspruch 6, wobei eine Schicht-3-Funkressourcensteuerungskonfigurationsnachricht die Information über das ausgewählte Wellenformformat umfasst.

8. Basisstation (300) zum Auswählen eines durch eine mobile Vorrichtung (340) für eine Aufwärtsstreckenkommunikation mit der Basisstation (300) verwendeten Wellenformformats, umfassend:
einen Empfänger (310), der ausgestaltet ist, Information (341) von der mobilen Vorrichtung (340) über mindestens zwei unterschiedliche Wellenformformate zu empfangen, die durch die mobile Vorrichtung (340) für eine Aufwärtsstreckenkommunikation gemäß einem Übertragungsstandard unterstützt werden;
eine Auswahlschaltung (320), die ausgestaltet ist, eines der mindestens zwei unterschiedlichen Wellenformformate für eine Aufwärtsstreckenkommunikation durch die mobile Vorrichtung (340) auszuwählen; und
einen Übertrager (330), der ausgestaltet ist, Information (331) über das ausgewählte Wellenformformat für eine Aufwärtsstreckenkommunikation an die mobile Vorrichtung (340) zu übertragen,
wobei der Übertrager (330) ferner ausgestaltet ist, Steuerinformation an die mobile Vorrichtung (340) zu übertragen, wobei die Steuerinformation eine Anweisung für die mobile Vorrichtung (340) zum Übertragen von Aufwärtsstreckendaten an die Basisstation unter Verwendung unterschiedlicher der mindestens zwei unterstützten Wellenformformate für eine Aufwärtsstreckenkommunikation umfasst;
wobei die Auswahlschaltung (320) ferner ausgestaltet ist, eine Empfangsleistung für jedes der mindestens zwei Wellenformformate für eine Aufwärtsstreckenkommunikation basierend auf den von der mobilen Vorrichtung (340) empfangenen Aufwärtsstreckendaten zu berechnen und die berechneten Empfangsleistungen zu vergleichen; und
wobei die Auswahlschaltung (320) ferner ausgestaltet ist, basierend auf dem Vergleich der berechneten Empfangsleistungen, eines der für eine Aufwärtsstreckenkommunikation verwendeten Wellenformformate als das ausgewählte Wellenformformat für eine Aufwärtsstreckenkommunikation auszuwählen.

9. Basisstation nach Anspruch 8, wobei die Auswahlschaltung (320) ausgestaltet ist, eines der mindestens zwei unterschiedlichen Wellenformformate für eine Aufwärtsstreckenkommunikation basierend auf verfügbarer Kontextinformation auszuwählen, wobei die Kontextinformation eine Information ist, die die Aufwärtsstreckenkommunikation zwischen der mobilen Vorrichtung (340) und der Basisstation beeinflusst.

## Revendications

1. Procédé (100), dans une station de base, pour sélectionner un format de forme d'onde utilisé par un dispositif mobile pour une communication en liaison montante avec la station de base, comprenant les étapes suivantes :
recevoir (102) des informations en provenance du dispositif mobile concernant au moins deux formats différents de forme d'onde pris en charge par le dispositif mobile pour une communication en liaison montante conformément à une norme de transmission ;
sélectionner (104) l'un des au moins deux formats différents de forme d'onde pour une communication en liaison montante par le dispositif mobile ; et
transmettre (106) des informations sur le format sélectionné de forme d'onde pour une communication en liaison montante vers le dispositif mobile,
où la sélection (104) de l'un des au moins deux formats différents de forme d'onde pour la communication en liaison montante comprend les étapes suivantes :
transmettre des informations de commande au dispositif mobile, les informations de commande comprenant une instruction pour le dispositif mobile pour transmettre des données de liaison montante à la station de base en utilisant différents formats des au moins deux formats de forme d'onde pris en charge pour la communication en liaison montante ;
calculer une performance de réception pour chacun des différents formats des au moins deux formats de forme d'onde pour la communication en liaison montante sur la base des données de liaison montante reçues du dispositif mobile, et comparer les performances de réception calculées ; et
sélectionner, sur la base de la comparaison des performances de réception calculées, un des formats de forme d'onde pour la communication en liaison montante comme format sélectionné de forme d'onde pour la communication en liaison montante.

2. Procédé selon la revendication 1, dans lequel la sélection (104) de l'un des au moins deux formats différents de forme d'onde pour la communication en liaison montante est basée sur des informations contextuelles disponibles, où les informations contextuelles sont des informations qui affectent la communication en liaison montante entre le dispositif mobile et la station de base.

3. Procédé selon l'une quelconque des revendications précédentes, dans lequel la transmission (106) d'informations relatives au format sélectionné de forme d'onde au dispositif mobile comprend l'étape suivante : transmettre les informations relatives au format sélectionné de forme d'onde au dispositif mobile par l'intermédiaire de la signalisation de commande de couche 1 ou de couche 2 conformément à la norme de transmission.

4. Procédé selon la revendication 3, dans lequel la signalisation de commande de couche 1 relative à l'octroi de ressources de liaison montante au dispositif mobile comprend les informations relatives au format sélectionné de forme d'onde.

5. Procédé selon la revendication 3, dans lequel la signalisation de commande de couche 1 spécifique dédiée à la commande du format de forme d'onde pour la communication en liaison montante comprend les informations relatives au format sélectionné de forme d'onde.

6. Procédé selon l'une quelconque des revendications 1 et 2, dans lequel la transmission (106) d'informations relatives au format sélectionné de forme d'onde au dispositif mobile comprend l'étape suivante : transmettre les informations relatives au format sélectionné de forme d'onde au dispositif mobile par l'intermédiaire d'une signalisation de commande de couche 3 ou de couche supérieure conformément à la norme de transmission.

7. Procédé selon la revendication 6, dans lequel un message de configuration de commande de ressources radio de couche 3 comprend les informations relatives au format sélectionné de forme d'onde.

8. Station de base (300) pour sélectionner un format de forme d'onde utilisé par un dispositif mobile (340) pour une communication en liaison montante avec la station de base (300), comprenant :
un récepteur (310) configuré pour recevoir des informations (341) du dispositif mobile (340) concernant au moins deux formats différents de forme d'onde pris en charge par le dispositif mobile (340) pour une communication en liaison montante conformément à une norme de transmission ;
un circuit de sélection (320) configuré pour sélectionner l'un des au moins deux formats différents de forme d'onde pour une communication en liaison montante par le dispositif mobile (340) ; et
un émetteur (330) configuré pour transmettre des informations (331) sur le format sélectionné de forme d'onde pour une communication en liaison montante vers le dispositif mobile (340),
où l'émetteur (330) est en outre configuré pour transmettre des informations de commande au dispositif mobile (340), les informations de commande comprenant une instruction pour le dispositif mobile (340) pour transmettre des données de liaison montante à la station de base en utilisant différents formats des au moins deux formats de forme d'onde pris en charge pour la communication en liaison montante ;
le circuit de sélection (320) est en outre configuré pour calculer une performance de réception pour chaque format des au moins deux formats de forme d'onde pour la communication en liaison montante sur la base des données de liaison montante reçues du dispositif mobile (340), et comparer les performances de réception calculées ; et
le circuit de sélection (320) est en outre configuré pour sélectionner, sur la base de la comparaison des performances de réception calculées, un des formats de forme d'onde utilisés pour la communication en liaison montante comme format sélectionné de forme d'onde pour la communication en liaison montante.

9. Station de base selon la revendication 8, dans laquelle le circuit de sélection (320) est configuré pour sélectionner l'un des au moins deux formats différents de forme d'onde pour la communication en liaison montante sur la base d'informations contextuelles disponibles, où les informations contextuelles sont des informations qui affectent la communication en liaison montante entre le dispositif mobile (340) et la station de base.
